# EUROPEAN PATENT APPLICATION

(11) **EP 1 555 459 A1**
(43) Date of publication of application: **20.07.2005**
(21) Application number: 02808026.5
(22) Date of filing: 21.10.2002
(51) Int. Cl.: F16H 48/08

(54) **DIFFERENTIAL GEAR FOR VEHICLE**

(71) Applicant: Kabushiki Kaisha Ondo Kousakusyo, Aki-gun, Hiroshima 737-1205 (JP)
(72) Inventor: SUGETA, Mitsuharu c/o K.K. Ondo Kousakusyo, Aki-gun, Hiroshima 737-1205 (JP)
(74) Representative: Senior, Alan Murray
(86) International application number: PCT/JP2002/010897
(87) International publication number: WO 2004/036088

(57) **Abstract**

The vehicle differential device 1 comprises a differential gear mechanism 2 which has a pair of side gears 9 and three pinions 10 that engage with these side gears 9, and a gear case 3 with an integrated structure that accommodates the differential gear mechanism 2, this gear case 3 comprising three pivot-supporting walls 14 that respectively pivotally support the three pinions 10 positioned equally spaced in the circumferential direction about the axial center of a drive shaft 8, and three opening windows 20, 21 and 22 that are formed between these pivot-supporting walls 14. Pinion seating surfaces 27 that receive the pinions 10 are formed on the inside surfaces of the respective pivot-supporting walls 14, and the differential gear mechanism 2 is installed so that the pinions 10 directly contact the respective pinion seating surfaces 27. Induction hardening, polishing, shot working or thermal spray coating process is performed on the pinion seating surfaces 27.

## Description

### TECHNICAL FIELD

The present invention relates to a vehicle differential device, and more particularly relates to a vehicle differential device which has a gear case in which the pinion thrust washers are omitted so that the pinions directly contact the pinion seating surfaces.

### BACKGROUND OF THE INVENTION

Vehicle differential devices are devices that transmit the rotational driving force from the engine of the vehicle to the driving wheels via a drive shaft; such devices have the function of allowing the differential movement of the inside and outside driving wheels during turning or the like.

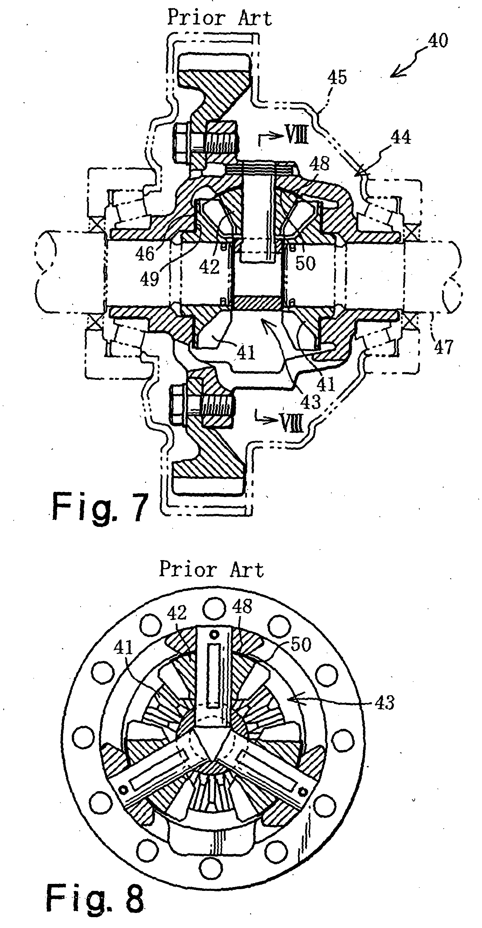

As is shown in Figs. 7 and 8, a three pinion type vehicle differential device 40 which was previously filed by the present applicant comprises a differential gear mechanism 43 including a pair of side gears (left and right side gears) 41 and three pinions 42 engaging with these side gears 41, a gear case 44 that accommodates this differential gear mechanism 43, a differential case 45 that accommodates this gear case 44.

A pair of side gear seating surfaces 46 (left and right side gear seating surfaces) receiving the side gears 41, and three pinion seating surfaces 48 that are positioned equally spaced in the circumferential direction about the axial center of the drive shaft 47, and that are receiving the pinions 42 and are formed on the inside surface of the gear case 44.

When the rotational driving force from the engine is transmitted to the vehicle differential device 40, the gear case 44 and pinions 42 rotate about the axial center of the drive shaft 47, and as this rotation occurs, the side gears 41 rotate about the axial center of the side gear seating surfaces 46 and drive shaft 47. Furthermore, when the vehicle turns, the respective pinions 42 revolve relatively to the pinion seating surfaces 48.

Accordingly, in order to prevent seizure, the side gears 41 and pinions 42 are not mounted in direct contact with the respective seating surfaces 46 and 48; instead, side gear thrust washers 49 are mounted between the side gears 41 and the side gear seating surfaces 46, and pinion thrust washers 50 are mounted between the pinions 42 and the pinion seating surfaces 48.

However, the mounting of pinion thrust washers 50 causes an increase in the manufacturing cost because of an increase in the number of parts required; furthermore, the time required for assembly work is also increased because of the complication of the assembly process for building the differential gear mechanism 43 into the gear case 44.

It is an object of the present invention to provide a vehicle differential device comprising a gear case having pinion seating surfaces that make it possible to omit the pinion thrust washers.

### DISCLOSURE OF THE INVENTION

The vehicle differential device of the present invention is a vehicle differential device for transmitting the rotational driving force from an engine of a vehicle to driving wheels via a drive shaft, comprising a differential gear mechanism which comprises a pair of side gears and three pinions that engage with these side gears; and a gear case with an integrated structure for accommodating the differential gear mechanism, this gear case comprising three pivot-supporting walls that respectively rotatably support the three pinions positioned equally spaced in a circumferential direction about an axial center of the drive shaft, and three opening windows that are formed between these pivot-supporting walls; the respective pivot-supporting walls being provided with pinion seating surfaces for receiving the pinions on an inside surfaces thereof, the differential gear mechanism being installed so that the pinions directly contact respective pinion seating surfaces.

In this vehicle differential device, when the rotational driving force from the engine is transmitted to the gear case, the gear case rotates about the axial center of the drive shaft, and the pinions rotate about the axial center of the drive shaft together with this rotation of the gear case. When the vehicle turns, the pinions received by the partially spherical pinion seating surfaces formed on the inside surfaces of the pivot-supporting walls of the gear case revolve.

In this vehicle differential device, since three pinions are installed, the load on each pinion can be reduced, and the durability can be increased, so that an increased engine output can be handled.

In this vehicle differential device, the three pinions are installed so that these pinions directly contact the respective pinion seating surfaces of the gear case, and the pinion thrust washers are thus omitted. Because of these pinion thrust washers being omitted, the number of parts required in the vehicle differential device is reduced so that the manufacturing cost is reduced, and installation in the gear case of the vehicle differential device is simplified, so that a shortening of the assembly time can also be realized.

Since the gear case is formed with an integrated structure, a simplification of the assembly work and an improvement in rigidity of the gear case are realized; furthermore, since opening windows are formed in positions facing the respective pivot-supporting walls with the axial center of the drive shaft interposed, the pinion seating surfaces with a partially spherical shape that are formed in the inside surfaces of the pivot-supporting walls can be machined smoothly with high precision.

Desirable configurations of the pinion seating surfaces will be described here.
(a) The pinion seating surfaces are formed with a high hardness by high-frequency induction hardening.
(b) The pinion seating surfaces are formed with a smooth surface by polishing.
(c) The pinion seating surfaces are formed with numerous fine oil sinks by shot beening.
(d) The pinion seating surfaces with a high hardness are made by a thermal spray coating.

### BRIEF DESCRIPTION OF THE DRAWINGS

Fig. 1 is a sectional view of a vehicle differential device according to an embodiment of the present invention;
Fig. 2 is a sectional view along a line II-II in Fig. 1;
Fig. 3 is a perspective view of the gear case;
Fig. 4 is a side view of the gear case as seen along an arrow IV in Fig. 3;
Fig. 5 is a bottom view of the gear case as seen along an arrow V in Fig. 3;
Fig. 6 is a sectional view along line VI-VI in Fig. 4;
Fig. 7 is a sectional view of a conventional vehicle differential device; and
Fig. 8 is a sectional view along line VIII-VIII in Fig. 7.

### PREFERRED EMBODIMENT OF THE INVENTION

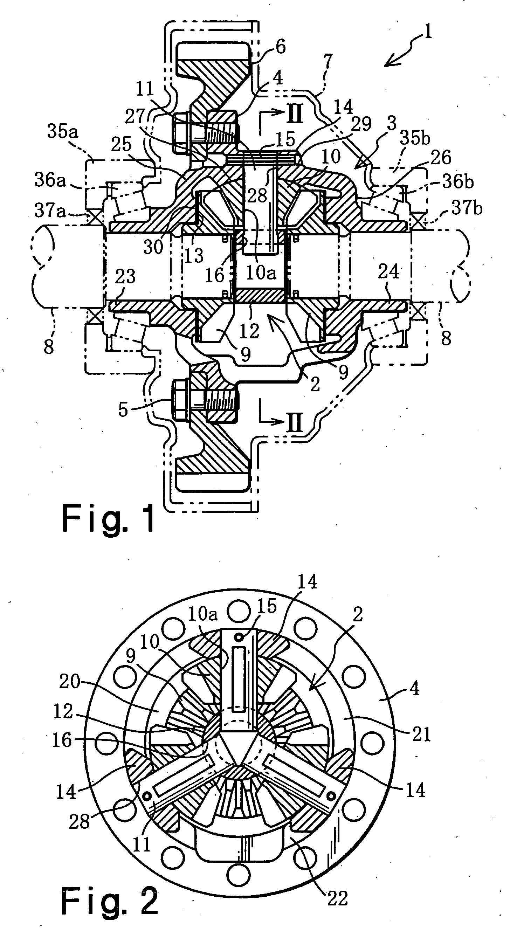

The present embodiment is one example of a case in which the present invention is applied to a vehicle differential device that transmits the rotational driving force from the engine of a front wheel drive type vehicle to the driving wheel axle. Furthermore, the vertical and horizontal directions in Fig. 1 are taken as the vertical and horizontal directions in the following description.

As is shown in Figs. 1 to 6, this vehicle differential device 1 comprises a differential gear mechanism 2, a gear case 3 with an integrated structure that accommodates this differential gear mechanism 2, a ring gear 6 which is fastened to the flange part 4 of this gear case 3 by a plurality of bolts 5, a differential case 7 which accommodates the gear case 3 together with oil.

The differential gear mechanism 2 comprises side gears 9 that are respectively connected to the end parts of left and right drive shafts 8 so that relative rotation is impossible, three pinions 10 that engage with these side gears 9, three pinion shafts 11 that respectively rotatably support these three pinions 10, a shaft supporting member 12 that supports the inside end parts of the three pinion shafts 11, and thrust washers 13 that are mounted between the gear case 3 and the side gears 9.

Shaft holes 10a are formed in the respective pinions 10, and the three pinions 10 are supported on the pinion shafts 11 so that these pinions 10 are free to rotate, with these pinions 10 being disposed so that the phase angle between the axial centers of the pinion shafts 11 inserted into the shaft holes 10a is 120 degrees. Spring pins 15 are mounted on the end parts of the respective pinion shafts 11 and the pivot-supporting walls 14 of the gear case 3, thus constraining the respective pinion shafts 11 so that these shafts 11 do not fall out.

The shaft supporting member 12 is made of a short cylindrical body; three supporting holes 16 are formed in this shaft supporting member 12 in positions that are equally spaced in the circumferential direction, and the inside end parts of the three pinion shafts 11 are passed through these supporting holes 16 so as to support pinion shafts 11. The ring gear 6 is formed as a separate body from the flange part 4, the ring gear 6 is fastened to the flange part 4 by a plurality of bolts 5, and the rotation driving force of the engine is input into this ring gear 6.

The gear case 3 accommodate, the differential gear mechanism 2, and is formed as an integrated structure. The gear case 3 comprises a flange part 4, three pivot-supporting walls 14 that are connected to the right side of the flange part 4, and that respectively pivotally support the three pinions 10 that are positioned equally spaced in the circumferential direction about the axial center of the drive shafts 8, three opening windows 20, 21, 22 that are formed between these three pivot-supporting walls 14, drive shaft supporting parts 23, 24 that support the left and right drive shafts 8, a connecting wall 25 that connects the flange part 4 and the left side drive shaft supporting part 23, and a connecting wall 26 that connects the pivot-supporting walls 14 and the right side drive shaft supporting part 24.

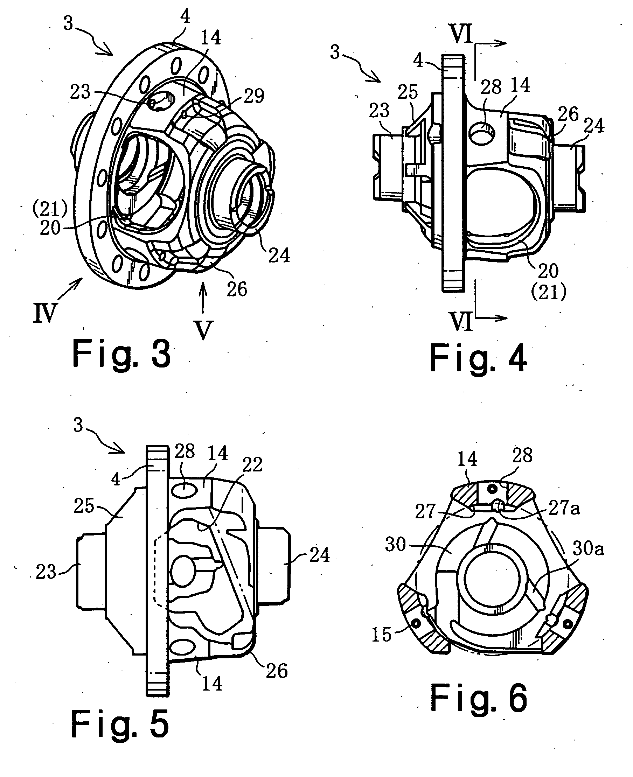

As is shown in Fig. 6, pinion seating surfaces 27 that receive the pinions 10 in direct contact are respectively formed on the inside surfaces of the three pivot-supporting walls 14; furthermore, supporting holes 28 for supporting the pinion shafts 11 are formed respectively in the pivot-supporting walls 14, and pin holes 29 for inserting spring pins 15 are formed respectively in the outer circumferential parts of the pivot-supporting walls 14. Each of pinion seating surfaces 27 is formed in a partially spherical shape corresponding to the back surface of the pinion 10, and oil grooves 27a for circulating oil to the back surfaces of the pinions 10 are formed in these pinion seating surfaces 27. Since the pinion thrust washers are omitted, high-frequency induction hardening is performed on the surfaces of the pinion seating surfaces 27 in the finishing step of the manufacturing process of the gear case 3, so that the surface is hardened to a depth of several tens of microns to several millimeters. Subsequently, polishing is performed.

The three opening windows 20, 21, 22 are respectively formed in positions facing the three pivot-supporting walls 14 with the axial center of the drive shaft 8 interposed. As is shown in Figs. 3, 4, 5, these opening windows 20, 21, 22 comprise first opening windows 20, 21 for installing the three pinions 10 inside the gear case 3, and a second opening window 22 for installing the two side gears 9 successively inside the gear case 3.

Side gear seating surfaces 30 receiving the side gears 9 are formed respectively on the inside surfaces of the connecting walls 25, 26. Thrust washers 13 are mounted between the respective side gears 9 and the side gear seating surfaces 30. Oil grooves 30a for circulating oil to the back surfaces of the side gears 9 are formed in the side gear seating surfaces 30.

As is shown in Fig. 1, the differential case 7 has a structure in which two differential case split bodies that can be separated to the left and right in the vicinity of the ring gear 6 are fastened together by means of a plurality of bolts.

The differential case 7 surrounds the gear case 3 that accommodates the differential gear mechanism 2, and the outer circumference of the ring gear 6, and is used to accommodate lubricating oil. A bearing 36a is mounted between the ring part 35a on the left end part of the differential case 7, and the drive shaft supporting part 23, and an oil seal 37a is mounted between the ring part 35a and the drive shaft 8. In the right end part of the differential case 7, a bearing 36b is mounted between the ring part 35b and the drive shaft supporting part 24, and an oil seal 37b is mounted between the ring part 35b and the drive shaft 8.

Next, the operation and advantages of the vehicle differential device 1 will be described.

The vehicle differential device 1 operates as follows: namely, when the rotational driving force from the engine of the vehicle is input into the ring gear 6, the gear case 3 is caused to rotate about the axial center of the drive shafts 8 by this rotational driving force; furthermore, the pinions 10 that are pivotally supported on the gear case 3 by the pinion shafts 11 rotate about the axial center of the drive shafts, the side gears 9 engaged with the pinions 10 rotate, the drive shafts 8 that are connected to the side gears 9 rotate, and the rotational driving force is finally transmitted to the driving wheels that are respectively connected to the drive shafts 8. Furthermore, when the vehicle turns, the pinions 10 rotate about the axial centers of the pinion shafts 11, so that differential movement of the left and right driving wheels is permitted.

In this vehicle differential device 1, the surfaces of the pinion seating surfaces 27 are hardened by high-frequency induction hardening; accordingly, even if the device is devised so that the pinions 10 directly contact the pinion seating surfaces 27, the pinion seating surfaces 27 are not damaged when the pinions 10 rotate about the axial centers of the pinion shafts 11. Accordingly, the pinion thrust washers that have conventionally been necessary between the pinions 10 and the pinion seating surfaces 27 can be omitted; as a result, the manufacturing cost can be reduced by reducing the number of parts required, and the assembly time can be shortened by simplifying the installation of the differential gear mechanism in the gear case.

Since the opening windows 20, 21, 22 are formed in positions that face the pivot-supporting walls 14 with respect to the axial center of the drive shafts 8, the high-frequency coil can easily be caused to approach the pinion seating surfaces 27 when induction hardening is performed, so that the surfaces of the pinion seating surfaces 27 can easily be hardened:

Since the differential gear mechanism 2 of this vehicle differential device 1 has three pinions 10, the load on the pinions 10 can be reduced, so that the durability of the pinions 10 and side gears 9 can be increased; accordingly, even a large rotational driving force that is input to the ring gear 6 from the engine can be handled. Since a shaft supporting member 12 that supports the inside end parts of the three pinion shafts 11 is provided, the inside end parts of the three pinion shafts 11 can be securely supported.

Next, examples of partial modifications of the abovementioned embodiment will be described.
(a) A construction may be used in which friction between the pinion seating surfaces 27 and pinions 10 can be reduced by polishing the pinion seating surfaces 27 with a styrene grindstone or the like so that smooth surfaces are produced, thus making it possible to cause direct contact of the pinions 10 with the pinion seating surfaces 27.
   In this modification as well, the gear case 3 is constructed so that opening windows 20, 21, 22 are formed in positions facing the pivot-supporting walls 14 with respect to the axial center of the drive shafts 8; accordingly, the styrene grindstone can easily be caused to approach the pinion seating surfaces 27 so that polishing can be performed. Furthermore, even if the styrene grindstone is formed in the same shape as the partially spherical surfaces of the pinion seating surfaces 27, the styrene grindstone can be inserted into the interior of the gear case 3 and the working time required for polishing can be shortened, since the opening windows 20, 21, 22 are formed as large windows.
(b) The pinion seating surfaces 27 may be subjected to shot working, so that the pinions 10 can be caused to make direct contact with the pinion seating surfaces 27. Specifically, if numerous fine "fish scale" form indentations and projections are formed in the pinion seating surfaces 27 by shot working, these indentations and projections form oil sinks in which oil from the oil grooves 27a accumulates, so that the friction between the pinion seating surfaces 27 and pinions 10 is reduced, thus making it possible to cause direct contact of the pinions 10 with the pinion seating surfaces 27.
(c) Wear of the pinion seating surfaces 27 can be prevented by forming a thermal spray coating with a high hardness on the pinion seating surfaces 27, thus constructing the device so that the pinions 10 can be caused to contact the pinion seating surfaces 27 directly.
(d) The embodiment and modifications (a) through (c) need not be constructed independently of each other. For example, the surfaces of the pinion seating surfaces 27 maybe polished, or thermal spray coatings may be formed on the surfaces of the pinion seating surfaces 27, after the surfaces of the pinion seating surfaces 27 are hardened by induction hardening.
(e) The vehicle differential device of the abovementioned embodiment was described using the vehicle differential device of a front wheel drive vehicle as an example; however, the present invention may also be applied to the vehicle differential device of a rear wheel drive vehicle. Furthermore, the ring gear of the vehicle differential device of a rear wheel drive vehicle may be formed as a helical gear instead of a spur gear.

The present invention is not limited to the embodiment described above; various modifications may be added to the abovementioned embodiment by those skilled in the art within limits that involve no departure from the spirit of the present invention, and the present invention also includes such modifications.

## Claims

1. A vehicle differential device for transmitting a rotational driving force from an engine of a vehicle to driving wheels via a drive shaft, comprising:
a differential gear mechanism which comprises a pair of side gears and three pinions that engage with these side gears; and
a gear case with an integrated structure for accommodating said differential gear mechanism, this gear case comprising three pivot-supporting walls that respectively rotatably support the three pinions positioned equally spaced in a circumferential direction about an axial center of the drive shaft, and three opening windows that are formed between these pivot-supporting walls;
the respective pivot-supporting walls being provided with pinion seating surfaces for receiving the pinions on an inside surfaces thereof, the differential gear mechanism being installed so that the pinions directly contact the respective pinion seating surfaces.

2. The vehicle differential device according to claim 1, wherein the pinion seating surfaces are formed with a high hardness by means of high-frequency induction hardening.

3. The vehicle differential device according to claim 1, wherein the pinion seating surfaces are formed into smooth surfaces by polishing.

4. The vehicle differential device according to claim 1, wherein numerous fine oil sinks are formed in the pinion seating surfaces by shot working.

5. The vehicle differential device according to claim 1, wherein thermal spray coatings with a high hardness are formed on the pinion seating surfaces.
